# EUROPÄISCHE PATENTSCHRIFT

(11) **EP 2 879 865 B1**
(45) Veröffentlichungstag und Bekanntmachung des Hinweises auf die Patenterteilung: **08.09.2021**
(21) Anmeldenummer: 13737187.8
(22) Anmeldetag: 04.07.2013
(51) Int. Cl.: B32B 25/10, B32B 25/14, F16L 11/08, F16L 11/12, B32B 1/08

(54) **UMLAGESCHLAUCH, INSBESONDERE ZUR VERWENDUNG BEI HOHEN TEMPERATUREN**
TRANSFER HOSE, IN PARTICULAR FOR USE AT HIGH TEMPERATURES
FLEXIBLE DE RÉPARTITION, DESTINÉ EN PARTICULIER À ÊTRE UTILISÉ À HAUTES TEMPÉRATURES

(30) Priorität: 02.08.2012 DE 102012107095
(43) Veröffentlichungstag der Anmeldung: 10.06.2015
(73) Patentinhaber: ContiTech Schlauch GmbH, 30165 Hannover (DE)
(72) Erfinder: BRÜHNE, Klaus, 34497 Korbach (DE); SCHMELTER, Klaus, 59929 Brilon (DE); TASSEKI, Metin, 34497 Korbach (DE); LANGE, Rainer, 35110 Frankenau (DE)
(74) Vertreter: Continental Corporation
(86) Internationale Anmeldenummer: PCT/EP2013/064107
(87) Internationale Veröffentlichungsnummer: WO 2014/019796

(56) Entgegenhaltungen:
- EP-A1- 1 024 320
- EP-A1- 1 582 797
- EP-A1- 2 422 966
- DE-A1-102009 026 254

## Beschreibung

Die Erfindung betrifft einen Umlageschlauch, der insbesondere bei hohen Temperaturen zum Einsatz kommt.

Umlageschläuche sind flexible Schläuche, die mit einer äußeren Lage aus Festigkeitsträgern, der so genannten Umlage, versehen sind. Innerhalb der umhüllenden äußeren Lage können derartige Schläuche mehrere Lagen oder Schichten aus unterschiedlichen, Elastomeren, thermoplastischen Elastomeren oder Thermoplasten und Festigkeitsträgern aufweisen. Die äußere Lage aus Festigkeitsträgern kann als Geflecht, Gestrick, Gewirke, Gewebe oder dergleichen vorliegen.

Textil-Umlageschläuche werden häufig im Niederdruckbereich und / oder im Niedertemperaturbereich (<150°C), z. Bsp. als Kraftstoff-. Öl-, oder Kompressorschläuche eingesetzt. Für den Hochtemperaturbereich (≥150°C) werden bisher üblicherweise Einlageschläuche verwendet, die allerdings aufgrund der notwendigen hochwertigen zusätzlichen Außenschicht einen deutlichen Kosten- und Gewichtsnachteil haben.

Umlageschläuche für Hochtemperaturanwendungen auf der Basis von Thermoplasten können unter anderem als Polytetrafluorethylen (PTFE)- Rohre oder auch als PTFE-Wellrohre (Teflon®-Wellrohre) mit zusätzlicher Edelstahlumflechtung ausgebildet sein. Nachteilig hierbei ist, dass derartige Schläuche ein höheres Gewicht haben, sehr steif und unflexibel sind und unter Bewegung eine geringe dynamische Leistungsfähigkeit aufweisen.

Des Weiteren sind Umlageschläuche bekannt, deren Umlage aus Glasfasern aufgebaut ist, und die insbesondere im Niederdruckbereich Verwendung finden. Glasfasern haben allerdings den Nachteil, dass sie mit zunehmender Temperatur eine erhöhte Hydrolyseanfälligkeit haben. Des Weiteren müssen bei der Verarbeitung von Glasfasern besondere Personenschutzmaßnahmen getroffen werden, welche die Komplexität in der Produktion deutlich erhöhen.

Im Rahmen einer Weiterentwicklung besteht die Aufgabe der Erfindung daher darin, einen Umlageschlauch bereitzustellen, der sich durch eine hohe dynamische Lebensdauerleistung auch unter hoher Bewegung und insbesondere bei hohen Temperaturen (≥150°C) auszeichnet. Gleichzeitig soll der Umlageschlauch eine höhere Flexibilität, ein geringeres Gewicht, geringe Mindestbiegeradien und vor allem keine Korrosions- bzw. Hydrolyseanfälligkeit aufweisen.

Gelöst wird diese Aufgabe dadurch, dass die Umlage des Umlageschlauches aus Stapelfasern ausgebildet ist und aus wenigstens 20 Gew.-% Polyphenylensulfid (PPS) und / oder Polyoxadiazol (POD) aufgebaut ist.

Überraschenderweise wurde gefunden, dass ein Umlageschlauch, dessen Umlage aus wenigstens 20 Gew. -% der oben genannten Werkstoffe alleine oder in Kombinationen in Form von Stapelfasern aufgebaut ist, sich durch eine besonders hohe dynamische Lebensdauerleistung auch unter hoher Bewegung bei hohen Temperaturen (≥150°C) auszeichnet.

Vorzugsweise werden die genannten Werkstoffe in Kombination mit Elastomeren, Thermoplastischen Elastomeren und / oder Thermoplasten eingesetzt, die eine Temperaturbeständigkeit von größer oder gleich 150°C aufweisen.

Ein derartiger Umlageschlauch findet vorzugsweise Verwendung im Bereich Turboladerschmierung, Turboladerkühlung, Kompressoren, Kraftstoffsystemen, Kühlwasser, Medienführung für bspw. Frostschutzmittel, Öle, etc., Dieselpartikelfiltern (DPF), Getriebe- und Motorkühlung oder in Bereichen, in denen aggressive Medien unter hohen Temperaturen transportiert werden müssen. Der erfindungsgemäße Umlageschlauch ist daher besonders geeignet für Temperaturen von größer oder gleich 150°C.

Der Umlageschlauch kann hierbei in gerader oder auch in geformter Ausführung, z.B. als Schlauchkrümmer verwendet werden.

Der Umlageschlauch kann ebenso als Formschlauch ausgebildet sein.

Wie bereits eingangs erwähnt können derartige Schläuche mehrere Lagen oder Schichten aus unterschiedlichen, Elastomeren, thermoplastischen Elastomeren oder Thermoplasten enthalten. Ebenso können neben der Umlage noch eine oder mehrere eingebettete Festigkeitsträgerlagen vorhanden sein. Hierfür können alle der fachkundigen Person bekannten Festigkeitsträgerwerkstoffe verwendet werden.

Grundsätzlich können erfindungsgemäß alle Elastomere, thermoplastische Elastomere oder Thermoplaste eingesetzt werden. Bevorzugt sind Elastomere, thermoplastische Elastomere oder Thermoplaste, die eine Temperaturbeständigkeit von größer oder gleich 150°C aufweisen.

Die Elastomere sind beispielsweise ausgewählt aus der Gruppe, bestehend aus: Fluor-Kautschuk (FKM) oder Ethylen-Acrylat-Kautschuk (AEM).

Besonders gute Ergebnisse hinsichtlich der dynamischen Stabilität bei hohen Temperaturen lassen sich erzielen, wenn FKM oder AEM verwendet werden.

Die genannten Elastomere können alleine oder im Verschnitt mit wenigstens zwei Elastomeren eingesetzt werden.

Ebenso ist es möglich, die Elastomere im Verschnitt mit Thermoplastischen Elastomeren und / oder Thermoplasten zu verwenden.

Als Thermoplastisches Elastomer findet vorzugsweise wenigstens ein Thermoplastisches Elastomer mit Polycarbonatanteil (TPE-C)Verwendung.

Als Festigkeitsträger für die Umlage finden erfindungsgemäß Polyphenylensulfid (PPS) und / oder Polyoxadiazol (POD) in Mengen von wenigstens 20 Gew.-% Verwendung.

Die Umlage muss erfindungsgemäß aus wenigstens 20 Gew. -%, bevorzugt aus wenigstens 30 Gew. -%, besonders bevorzugt aus wenigstens 50 Gew. -%, ganz besonders bevorzugt aus wenigstens 80 Gew. -%, der genannten Werkstoffe alleine oder in Kombination, z.B. als Hybrid oder als Mischgeflecht, bestehen. Es ist auch möglich, dass die Umlage zu 100 Gew. -% aus den genannten Werkstoffen alleine oder in Kombination besteht.

In einer besonders bevorzugten Ausführungsform ist die Umlage frei von Glasfasern, um die bereits eingangs erwähnten Nachteile zu vermeiden.

Beispiele für derartige Hybrid- oder Mischgeflechtkonzepte sind: PPS/m-Aramid, PPS/PBO, PPS/POD, Edelstahl/PPS.

Ein Mischgeflecht besteht hierbei aus wenigstens zwei alleinstehenden Fäden, die miteinander verflochten, als Webware verwoben, als Maschenware verstrickt, als Vlies oder Filz verarbeitet sind.

Bei einem Hybrid besteht der Faden aus wenigstens zwei verschiedenen Materialien.

Der Festigkeitsträgerwerkstoff für die Umlage liegt erfindungsgemäß in einer Fadenform als Stapelfaser vor.

Stapelfasern sind besonders gut geeignet, da sie in der Regel im Vergleich zu unbehandelten Filamentgarnen eine erhöhte physikalische Lagenhaftung erzeugen. Gemäß Römpp, Online-Chemielexikon, Version 3.14 ist der Begriff Stapelfaser eine alte Bezeichnung für Spinnfasern. Bei Spinnfasern handelt es sich um "eine auf chemischtechnischem Wege nach unterschiedlichen Verfahren erzeugte Faser begrenzter Länge (im Gegensatz zu Filamenten), die meist als Flocke anfällt und nach einem mechanischen Spinnverfahren zu Spinnfasergarn oder Spinnband versponnen oder zu Filzen, Vliesstoffen, Watte, Füll- und Isoliermaterial oder ähnlichen Erzeugnissen verarbeitet wird." Dies bedeutet, dass alle Stapelfasern Einzelfasern sind, deren Längen begrenzt sind. Die Stapelfasern haben in der Regel eine Länge zwischen 10 und 70 mm. Die Stapelfasern können aus einer Sorte Fasern oder aus einer Kombination von zwei oder mehr verschiedenen Fasern bestehen.

Der Einsatz einer Stapelfaserkonstruktion ermöglicht eine größere Oberflächenabdeckung im Vergleich zu einer endlosen Filamentfaser und einen verbesserten Hitzeschutz durch die isolierende Wirkung der Lufteinschlüsse in der Stapelfaserkonstruktion. Im unbehandelten Zustand haben die Stapelfasern ein besseres physikalisches Haftungsvermögen zur Innenschicht bzw. zur Zwischenschicht. Zugleich ergibt sich die Möglichkeit einer verbesserten möglichen Oberflächenbehandlung der Stapelfasern.

Der Gesamt-Titer pro Faden beträgt bevorzugt 500 bis 10000 dtex, besonders bevorzugt 900 bis 3000 dtex. Das Drehungsniveau liegt bevorzugt bei 0 bis 750 t/m, besonders bevorzugt bei 300 bis 500 t/m.

Der erfindungsgemäße Umlageschlauch kann zusätzlich mit einer biegesteifen Verstärkung, wie sie bspw. aus EP 202 436 A2 für Schläuche mit einer (elastomeren) Deckschicht bekannt sind, ausgerüstet sein. Bei der biegesteifen Verstärkung handelt es sich vorzugsweise um Monofile, auch als Monofilamente bezeichnet, welche gleich- oder gegensinnig um bzw. in die Umlage gewickelt sind. Die Monofile können dabei auch gekreuzt gewickelt sein. Die Monofile können aus einem metallischen, wie bspw.

Edelstahl, oder einem nicht-metallischen Werkstoff, wie bspw. PPS oder POD, aufgebaut sein. D.h. das Material der biegesteifen Verstärkung kann hierbei gleich oder verschieden vom Material der Umlage sein.

Die Umlage wird als textiles Flächengebilde in Form von Geflecht, Cord, Gestrick, Gewirk, Gewebe, Vlies oder Gelege aufgebracht, wobei vorzugsweise die Aufbringung als Geflecht erfolgt. Die Umlageschicht kann dabei einlagig oder mehrlagig ausgebildet sein. Bevorzugt hat die Umlageschicht 1 bis 5 Lagen, besonders bevorzugt 1 bis 3 Lagen und ganz besonders bevorzugt 1 bis 2 Lagen.

Es ist ggf. möglich, dass auf die Umlage, d.h. auf die außen liegenden Festigkeitsträger, ein Schutz aufgebracht werden kann, der die Fasern vor äußeren Einflüssen, wie bspw. mechanische oder chemische Beschädigungen, schützt.

Die Festigkeitsträger können auch ganz oder teilweise eingefärbt werden, bspw. durch Spinnfärbung, Kreuzspulfärbung oder Strangfärbung. Dies dient u.a. zur optischen Kennzeichnung. Des Weiteren ist eine nachträgliche Oberflächenfunktionalisierung z.B. mit RFL oder Fluorpolymerlösungen, ggf. in Kombination mit einer Färbung, möglich. Dieser Umlagenschutz dient zum Einen als Schnittschutz, welcher das Auffransen der Schnittstelle verhindert, zum Anderen werden die Haftung zwischen Faser und Innenschicht, die Kennzeichnungsmöglichkeit, die Optik und die Verschmutzungsunanfälligkeit verbessert.

Besonders gute dynamische Beständigkeit bei hohen Temperaturen lässt sich durch folgende Kombinationen von Elastomer und Festigkeitsträger erzielen:
AEM / PPS → 150°C Dauerhaltbarkeit, 175°C Spitzenwert
FKM / PPS → 190°C Dauerhaltbarkeit, 210°C Spitzenwert
FKM / POD → 210°C Dauerhaltbarkeit, 230°C Spitzenwert
FKM / m-Aramid → 230°C Dauerhaltbarkeit, 250°C Spitzenwert

Die Erfindung wird nun anhand eines Ausführungsbeispiels unter Bezugnahme auf Versuchsergebnisse und schematische Zeichnungen erläutert.

### Versuchsergebnisse

Ein nicht erfindungsgemäßer Umlageschlauch mit einer Innenschicht aus FPM und einer Umlage aus PPS-Stapelfaser zeigt bei einer Wärmealterung im Umluftofen bei 190°C nach 7 Tagen keinerlei Festigkeitsverlust. Der Abbau wurde hierbei durch Ermittlung des Berstdruckes an neuen Schläuchen im Vergleich zu gealterten Schläuchen ermittelt. Nach 42 Tagen ergibt sich ein Festigkeitsverlust von lediglich 15%.

Ein vergleichender Umlageschlauch mit einer Innenschicht aus FPM und einer Umlage aus Polyester (PES)-Fasern zeigt bei einer Wärmealterung im Umluftofen bei 190°C nach 7 Tagen einen Festigkeitsverlust von über 30%. Nach 42 Tagen ergibt sich ein Festigkeitsverlust von über 40%, der bei Schlauchkonstruktionen, die auf Fahrzeuglebensdauer ausgelegt sind, nicht akzeptabel ist.

Ein vergleichender Umlageschlauch mit einer Innenschicht aus NBR und einer Umlage aus Modal (CMD)-Fasern zeigt bei einer Wärmealterung im Umluftofen bei 150°C nach 7 Tagen eine derartige Verhärtung, dass eine weitere Prüfung nicht mehr möglich war, da er bei Biegung auseinandergebrochen ist.

### Schematische Zeichnungen

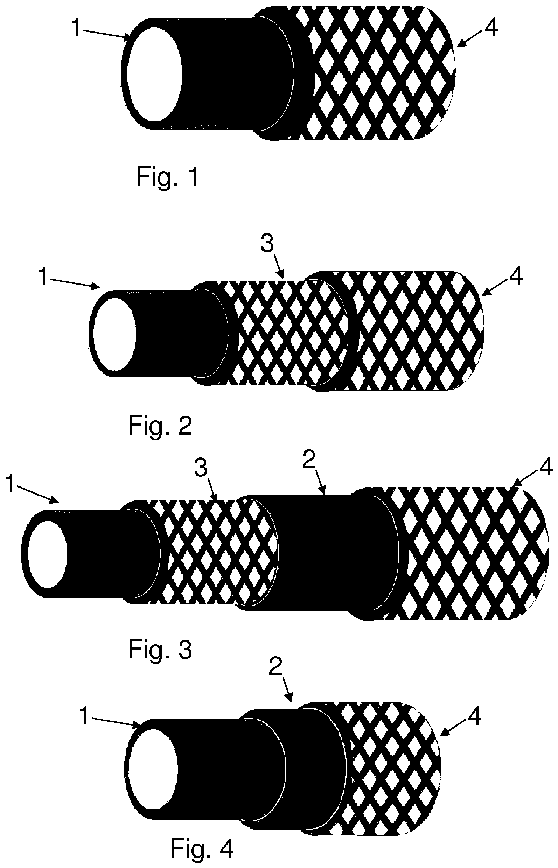

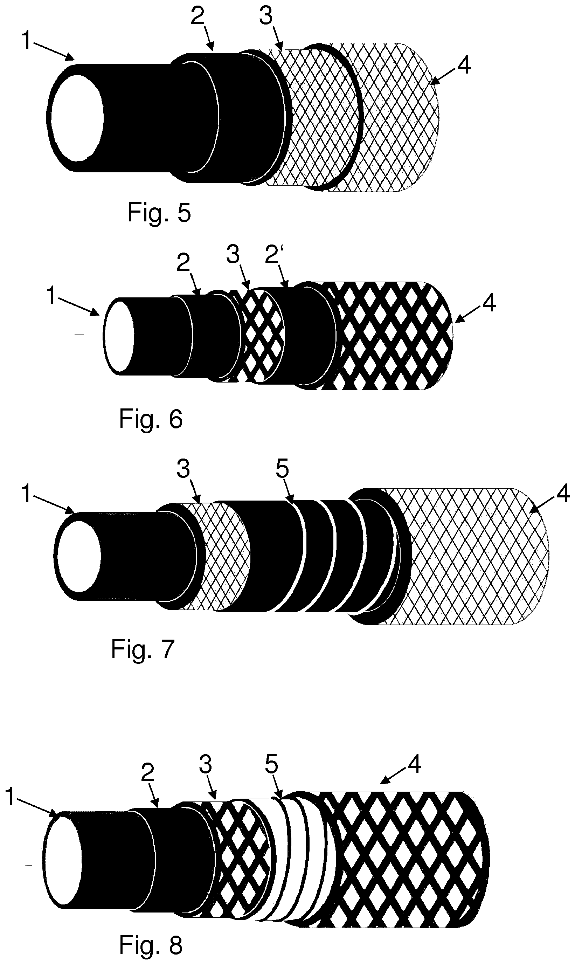

Die Figuren 1 bis 8 zeigen jeweils unterschiedliche Schlauchaufbauten:
- Fig. 1: zeigt einen Umlageschlauch aufgebaut aus: Innenschicht 1, Umlage 4
- Fig. 2: zeigt einen Umlageschlauch aufgebaut aus: Innenschicht 1, eingebettete Festigkeitsträgerlage 3, Umlage 4
- Fig. 3: zeigt einen Umlageschlauch aufgebaut aus: Innenschicht 1 , eingebettete Festigkeitsträgerlage 3, Zwischenschicht 2, Umlage 4
- Fig. 4: zeigt einen Umlageschlauch aufgebaut aus: Innenschicht 1, Zwischenschicht 2, Umlage 4
- Fig. 5: zeigt einen Umlageschlauch aufgebaut aus: Innenschicht 1, Zwischenschicht 2, eingebettete Festigkeitsträgerlage 3, Umlage 4
- Fig. 6: zeigt einen Umlageschlauch aufgebaut aus: Innenschicht 1, Zwischenschicht 2, eingebettete Festigkeitsträgerlage 3, Zwischenschicht 2', Umlage 4

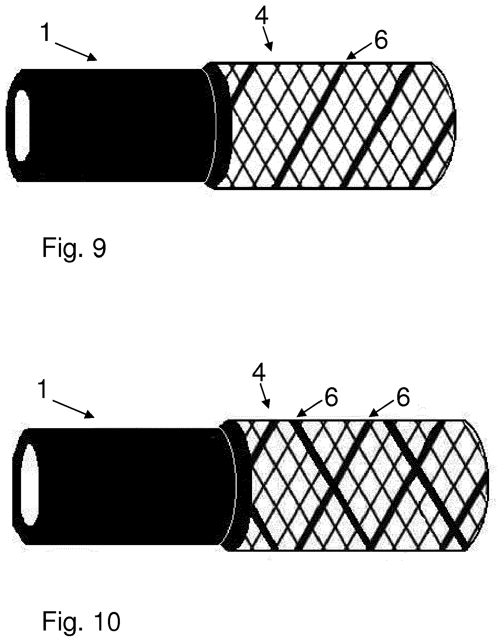

- Fig. 7: zeigt einen Umlageschlauch aufgebaut aus: Innenschicht 1, eingebettete Festigkeitsträgerlage 3, Wendel 5, Umlage 4 Der Wendel 5 kann zusätzlich in einer Elastomermatrix eingebettet werden. Als Alternative zur Einbringung der Wendel 5 zwischen zwei Festigkeitsträgerlagen 3, 3' kann zur Verbesserung der Knickempfindlichkeit bei gleichzeitiger Erhöhung der Unterdruckbeständigkeit eine Monofile Verstärkung Verwendung finden (siehe auch Fig. 9 und Fig. 10).
- Fig. 8: zeigt einen Umlageschlauch aufgebaut aus: Innenschicht 1, Zwischenschicht 2, eingebettete Festigkeitsträgerlage 3, Wendel 5, Umlage 4 Der Wendel 5 kann zusätzlich in einer Elastomermatrix eingebettet werden. Als Alternative zur Einbringung der Wendel 5 zwischen zwei Festigkeitsträgerlagen 3, 3' kann zur Verbesserung der Knickempfindlichkeit bei gleichzeitiger Erhöhung der Unterdruckbeständigkeit eine Monofile Verstärkung Verwendung finden (siehe auch Fig. 9 und Fig. 10).
- Fig. 9: zeigt einen Umlageschlauch aufgebaut aus: Innenschicht 1 und Umlage 4 Die Umlage 4 ist hierbei zusätzlich mit integrierten Monofilamenten (fette Linien) als biegesteife Verstärkung 6, wie sie aus EP 202 436 A2 bekannt ist, ausgestattet.
- Fig. 10: zeigt einen Umlageschlauch aufgebaut aus: Innenschicht 1 und Umlage 4 Die Umlage 4 ist hierbei zusätzlich mit integrierten kreuzweise gewickelten Monofilamenten (fette Linien) als biegesteife Verstärkung 6, wie sie aus EP 202 436 A2 bekannt ist, ausgestattet.

### Bezugszeichenliste

### (Teil der Beschreibung)

- 1: Innenschicht
- 2, 2': Zwischenschicht
- 3, 3': eingebettete Festigkeitsträgerschicht
- 4: äußere Festigkeitsträgerschicht (Umlage), einlagig oder mehrlagig
- 5: Wendel
- 6: biegesteife Verstärkung (Monofilamente)

## Patentansprüche

1. Mehrschichtiger Umlageschlauch enthaltend wenigstens eine Innenschicht (1) und eine Umlageschicht (4), **dadurch gekennzeichnet, dass** die Innenschicht (1) aus Fluorkautschuk (FKM) oder Ethylen-Acrylat-Kautschuk (AEM) aufgebaut ist und dass die Umlageschicht (4) aus Stapelfasern ausgebildet ist und aus wenigstens 20 Gew. -% Polyphenylensulfid (PPS) und / oder Polyoxadiazol (POD) aufgebaut ist.

2. Mehrschichtiger Umlageschlauch nach Anspruch 1, **dadurch gekennzeichnet, dass** die Umlageschicht (4) frei von Glasfasern ist.

3. Mehrschichtiger Umlageschlauch nach einem der Ansprüche 1 bis 2, **dadurch gekennzeichnet, dass** die Umlageschicht (4) zusätzlich mit einer biegesteifen Verstärkung ausgestattet ist.

4. Mehrschichtiger Umlageschlauch nach einem der Ansprüche 1 bis 3, **dadurch gekennzeichnet, dass** zwischen der Innenschicht (1) und der Umlageschicht (4) wenigstens eine Zwischenschicht (2,2') und / oder wenigstens eine eingebettete Festigkeitsträgerschicht (3, 3') angeordnet ist.

5. Mehrschichtiger Umlageschlauch nach einem der Ansprüche 1 bis 4, **dadurch gekennzeichnet, dass** die Innenschicht (1) und die Zwischenschicht (2, 2') aus Fluorkautschuk (FKM) und / oder Ethylen-Acrylat-Kautschuk (AEM) aufgebaut sind.

6. Verwendung eines mehrschichtigen Umlageschlauchs nach einem der Ansprüche 1 bis 5 als Schlauch für die Turboladerschmierung, für Kompressor-Schläuche, für Dieselpartikelfiltersysteme, für Kraftstoffschläuche, für Kühlwasserschläuche, für medienführende Schläuche und für Ölschläuche.

## Claims

1. Multi-layer mantle hose comprising at least one inner layer (1) and a mantle layer (4), **characterized in that** the inner layer (1) is constructed from fluororubber (FKM) or ethylene-acrylate rubber (AEM) and **in that** the mantle layer (4) is formed from staple fibers and is constructed from at least 20% by weight of polyphenylene sulfide (PPS) and/or polyoxadiazole (POD).

2. Multi-layer mantle hose according to Claim 1, **characterized in that** the mantle layer (4) is free from glass fibres.

3. Multi-layer mantle hose according to either of Claims 1 to 2, **characterized in that** the mantle layer (4) is additionally provided with a rigid reinforcing element.

4. Multi-layer mantle hose according to any of Claims 1 to 3, **characterized in that** at least one interlayer (2, 2') and/or at least one embedded strength member layer (3, 3') is arranged between the inner layer (1) and the mantle layer (4).

5. Multi-layer mantle hose according to any of Claims 1 to 4, **characterized in that** the inner layer (1) and the intermediate layer (2,2') are constructed from fluororubber (FKM) and/or ethylene-acrylate rubber (AEM).

6. Use of a multi-layer mantle hose according to any of Claims 1 to 5 as a hose for turbocharger lubrication, for compressor hoses, for diesel particulate filter systems, for fuel hoses, for cooling water hoses, for media-conducting hoses and for oil hoses.

## Revendications

1. Tuyau d'enveloppe multicouche, ledit tuyau contenant au moins une couche intérieure (1) et une couche d'enveloppe (4), **caractérisé en ce que** la couche intérieure (1) est composée de caoutchouc fluoré (FKM) ou de caoutchouc éthylène-acrylate (AEM) et **en ce que** la couche d'enveloppe (4) est formée de fibres discontinues et est composée d'au moins 20 % en poids de sulfure de polyphénylène (PPS) et/ou de polyoxadiazole (POD).

2. Tuyau d'enveloppe multicouche selon la revendication 1, **caractérisé en ce que** la couche d'enveloppe (4) est dépourvue de fibres de verre.

3. Tuyau d'enveloppe multicouche selon l'une des revendications 1 à 2, **caractérisé en ce que** la couche d'enveloppe (4) est en outre équipée d'un renfort résistant à la flexion.

4. Tuyau d'enveloppe multicouche selon l'une des revendications 1 à 3, **caractérisé en ce qu'**au moins une couche intermédiaire (2, 2') et/ou au moins une couche de renfort noyée (3, 3') sont disposées entre la couche intérieure (1) et la couche d'enveloppe (4).

5. Tuyau d'enveloppe multicouche selon l'une des revendications 1 à 4, **caractérisé en ce que** la couche intérieure (1) et la couche intermédiaire (2, 2') sont composées de caoutchouc fluoré (FKM) et/ou de caoutchouc éthylène-acrylate (AEM).

6. Utilisation d'un tuyau d'enveloppe multicouche selon l'une des revendications 1 à 5 comme tuyau pour la lubrification de turbocompresseur à suralimentation, pour des tuyaux de compression, pour des systèmes de filtres à particules diesel, pour des tuyaux de carburant, pour des tuyaux d'eau de refroidissement, pour des tuyaux de conduites de milieux et pour des tuyaux d'huile.
